# EUROPEAN PATENT APPLICATION

(11) **EP 4 708 976 A1**
(43) Date of publication of application: **11.03.2026**
(21) Application number: 23945466.3
(22) Date of filing: 19.07.2023
(51) Int. Cl.: H04W 52/02

(54) **POWER SAVING METHOD AND APPARATUS FOR ACCESS POINT, AND DEVICE AND STORAGE MEDIUM**

(71) Applicant: GUANGDONG OPPO MOBILE TELECOMMUNICATIONS CORP., LTD., Dongguan, Guangdong 523860 (CN)
(72) Inventor: LUO, Chaoming, Dongguan, Guangdong 523860 (CN); LU, Liuming, Dongguan, Guangdong 523860 (CN); GAO, Ning, Dongguan, Guangdong 523860 (CN); LI, Yapu, Dongguan, Guangdong 523860 (CN)
(74) Representative: Novagraaf Technologies
(86) International application number: PCT/CN2023/108244
(87) International publication number: WO 2025/015576

(57) **Abstract**

The present disclosure relates to the field of wireless communications, and relates to a power saving method and apparatus for an access point, and a device and a storage medium. The method comprises: sending a first frame, which is used for indicating that an access point has acquired a TXOP and has entered a power save state in the TXOP. With regard to a station which does not support a power-saving function, the station determines, on the basis of the first frame, that the access point has acquired the TXOP, and thus the station enters a silent state, such that communication between the station and the access point is prevented from being abnormal even if the station does not support the power-saving function. With regard to a station which supports the power-saving function, the station determines, on the basis of the first frame, that the access point has acquired the TXOP and has entered the power save state in the TXOP, and the station then supports related subsequent operation in the power save state.

## Description

### TECHNICAL FIELD

Embodiments of the present disclosure relate to the field of communication technologies, and in particular, relate to an access point (AP) power-saving method and apparatus, and a device and storage medium thereof.

### RELATED ART

In a basic service set (BSS), an AP may communicate with one or more stations (STAs).

In related power-saving technologies, an AP schedules its own awake service periods (awake SPs), and enters a doze state outside these awake SPs to save power. The AP may perform scheduling using a mechanism such as target wake time (TWT).

However, the AP may only use the above power-saving method in a case where all STAs associated with the AP support the method; otherwise, the communication between the AP and STAs that do not support the power-saving method may be affected.

### SUMMARY

Embodiments of the present disclosure provide an AP power-saving method and apparatus, a device and medium thereof. The technical solutions are as follows:

According to one aspect of the embodiments of the present disclosure, an AP power-saving method is provided. The method is performed by an AP, and includes:
transmitting a first frame, wherein the first frame is used to indicate that the AP has acquired a transmission opportunity (TXOP) and is to enter a power save state within the TXOP.

According to the embodiments of the present disclosure, an AP power-saving method is provided. The method is performed by a third STA, and includes:
receiving a first frame from an AP; and
determining, based on the first frame, whether the AP enters a power save state within a TXOP.

According to the embodiments of the present disclosure, an AP power-saving apparatus is provided. The apparatus includes a transmitting module.

The transmitting module is configured to transmit a first frame, wherein the first frame is used to indicate that an AP has acquired a TXOP and is to enter a power save state within the TXOP.

According to another aspect of the embodiments of the present disclosure, an AP power-saving apparatus is provided. The apparatus includes a receiving module and a processing module.

The receiving module is configured to receive a first frame from an AP.

The processing module is configured to determine, based on the first frame, whether the AP enters a power save state within a TXOP.

According to another aspect of the embodiments of the present disclosure, a wireless device is provided. The wireless device includes: a processor; a transceiver communicably connected to the processor; and a memory for storing one or more instructions executable by the processor; wherein the processor is configured to load and execute the one or more instructions to perform the AP power-saving method as described above.

According to another aspect of the embodiments of the present disclosure, a computer-readable storage medium storing one or more executable instructions is provided. The one or more executable instructions, when loaded and executed by a processor, cause the processor to perform the AP power-saving method as described above.

According to another aspect of the embodiments of the present disclosure, a chip is provided. The chip includes programmable logic circuitry or one or more programs, wherein the chip, when running, is configured to perform the AP power-saving method as described above.

According to another aspect of the embodiments of the present disclosure, a computer program product is provided. The computer program product includes one or more computer instructions stored in a computer-readable storage medium. The one or more computer instructions, when read by a processor of a wireless device from the computer-readable storage medium and executed by the processor, cause the wireless device to perform the AP power-saving method as described above.

According to another aspect of the embodiments of the present disclosure, a computer program is provided. The computer program includes one or more computer instructions, wherein the one or more computer instructions, when executed by a processor of a wireless device cause the wireless device to perform the AP power-saving method as described above.

The technical solutions according to the embodiments of the present disclosure include at least the following beneficial effects:

The first frame is transmitted and the first frame is used to indicate that the AP has acquired the TXOP and is to enter a power save state within the TXOP. For STAs that do not support a power-saving function, the STAs determine, based on the first frame, that the AP has acquired the TXOP, and thus the STAs enter a silent state. This ensures that even in a case where the STAs do not support the power-saving function, the communication between the STAs and the AP remains unaffected, that is, no packet loss or connection loss occurs. For STAs that support the power-saving function, the STAs determine, based on the first frame, that the AP has acquired the TXOP and that the AP is to enter a power save state within the TXOP, such that the STAs are enabled to support related subsequent operations in the power save state.

### BRIEF DESCRIPTION OF DRAWINGS

For clear descriptions of the technical solutions according to the embodiments of the present disclosure, the drawings required for describing the embodiments are briefly described hereinafter. It is obvious that the drawings in the following descriptions are merely for illustrating some embodiments of the present disclosure, and those of ordinary skill in the art may derive other drawings based on these drawings without any creative efforts.
FIG. 1 is a schematic diagram of a wireless system according to some exemplary embodiments of the present disclosure;
FIG. 2 is a schematic flowchart of an AP power-saving method according to some exemplary embodiments of the present disclosure;
FIG. 3 is a schematic flowchart of an AP power-saving method according to some exemplary embodiments of the present disclosure;
FIG. 4 is a schematic flowchart of an AP power-saving method according to some exemplary embodiments of the present disclosure;
FIG. 5 is a schematic diagram of message interaction between an AP and STAs according to some exemplary embodiments of the present disclosure;
FIG. 6 is a schematic flowchart of an AP power-saving method according to some exemplary embodiments of the present disclosure;
FIG. 7 is a schematic diagram of message interaction between an AP and STAs according to some exemplary embodiments of the present disclosure;
FIG. 8 is a schematic flowchart of an AP power-saving method according to some exemplary embodiments of the present disclosure;
FIG. 9 is a schematic diagram of message interaction between an AP and STAs according to some exemplary embodiments of the present disclosure;
FIG. 10 is a schematic flowchart of an AP power-saving method according to some exemplary embodiments of the present disclosure;
FIG. 11 is a schematic diagram of message interaction between an AP and STAs according to some exemplary embodiments of the present disclosure;
FIG. 12 is a schematic flowchart of an AP power-saving method according to some exemplary embodiments of the present disclosure;
FIG. 13 is a schematic diagram of message interaction between an AP and STAs according to some exemplary embodiments of the present disclosure;
FIG. 14 is a schematic flowchart of an AP power-saving method according to some exemplary embodiments of the present disclosure;
FIG. 15 is a schematic diagram of message interaction between an AP and STAs according to some exemplary embodiments of the present disclosure;
FIG. 16 is a structural block diagram of an AP power-saving apparatus according to some exemplary embodiments of the present disclosure;
FIG. 17 is a structural block diagram of an AP power-saving apparatus according to some exemplary embodiments of the present disclosure; and
FIG. 18 is a schematic structural diagram of a wireless device according to some exemplary embodiments of the present disclosure.

### DETAILED DESCRIPTION

For clearer descriptions of the objectives, technical solutions, and advantages of the present disclosure, the embodiments of the present disclosure are described hereinafter in detail with reference to the drawings. The exemplary embodiments are described in detail here, and their examples are shown in the accompanying drawings. When the following description relates to the accompanying drawings, the same reference numerals in different drawings represent the same or similar elements, unless otherwise indicated. The embodiments described in the following exemplary embodiments do not represent all the embodiments consistent with the present disclosure. Rather, these embodiments are merely examples of devices and methods that are consistent with some aspects of the present disclosure as detailed in the appended claims.

The terms used in the present disclosure are solely for the purpose of describing specific embodiments and are not intended to limit the present disclosure. The singular forms "a, " "an," and "the" used in the present disclosure and the appended claims are also intended to encompass their plural forms, unless the context clearly indicates otherwise. It should be understood that the term "and/or" as used herein refers to and includes any or all possible combinations of one or more of associated listed items.

It should be understood that although terms such as "first," "second," and "third" may be used in the present disclosure to describe various information, such information should not be limited by these terms. These terms are only used to distinguish information of the same type from each other. For example, without departing from the scope of the present disclosure, first information may also be referred to as second information, and similarly, second information may also be referred to as first information. The term "in a case where" as used herein may be interpreted as "when," "upon," or "in response to determining" depending on the context.

First, relevant terms involved in the present disclosure are introduced hereinafter.

**An AP,** also known as a wireless AP, is a creator of a wireless network and also a central node of the wireless network. The AP enables wireless access to a network, acting as a bridge connecting a wired network and the wireless network. For example, a router is a type of AP.

**An STA** refers to a terminal connected to the wireless network, which is generally a client in a wireless local area network. The STA may be a computer equipped with a wireless network card, a smart phone with a wireless fidelity (Wi-Fi) module, or may be mobile or fixed.

**A TXOP** refers to a medium access control (MAC) layer function used in a wireless local area network based on the Institute of Electrical and Electronics Engineers (IEEE) 802.11 standard. The TXOP defines a duration or a maximum duration during which an STA, upon acquisition of a transmission medium, is capable of transmitting frames.

**A first version of a communication protocol** refers to a version earlier than a current protocol version. Exemplarily, the first version of the communication protocol includes at least one of 802.11n, 802.11ac, 802.11 ax, or 802.11be.

**A second version of a communication protocol** refers to the current protocol version and a communication protocol supported by subsequent versions of the current protocol. Exemplarily, the second version of the communication protocol includes ultra-high reliability (UHR) or 802.11bn.

**A first STA** refers to a legacy STA that supports the first version of the communication protocol.

**A second STA** refers to an STA that supports the second version of the communication protocol but fails to support a power-saving function of an AP according to the embodiments of the present disclosure.

**A third STA** refers to an STA that supports both the second version of the communication protocol and the AP power-saving function according to the embodiments of the present disclosure.

**A fourth STA** refers to at least one new to-be-associated STA in a BSS. The fourth STA supports either the first version of the communication protocol or the second version of the communication protocol. The fourth STA may or may not support the power-saving function according to the embodiments of the present disclosure.

**A power save state** is also known as a low-power reception and transmission (Rx/Tx) state, a low-power operating state, a power-saving Rx/Tx state, or a first state. In the power save state, a sub-channel corresponding to the power save state and at least one spatial stream are used for data transmission.

**An awake state** is also known as a normal state, a normal Rx/Tx state, or a second state. In the awake state, a current maximum available bandwidth and at least one spatial stream are used for data transmission. That is, a channel bandwidth used in the power save state is less than or equal to a channel bandwidth used in the awake state, and/or the number of spatial streams used in the power save state is less than or equal to the number of spatial streams used in the awake state.

**A clear channel assessment (CCA)** refers to a channel monitoring mechanism, which mainly includes energy detection and carrier sense. The carrier sense is used to detect a preamble of a physical layer protocol data unit (PPDU) and may identify a start boundary of a data packet. Basically, a preamble part as specified in an 802.11 standard is constructed using a specific sequence, which is known to both a transmitter and a receiver. A monitoring node continuously samples channel signals and uses the channel signals for relevant operations. A calculated value of the related operation is required to be compared with a threshold. In a case where the calculated value is greater than the threshold, the monitoring node considers that a signal is detected; and in a case where the calculated value is less than the threshold, the monitoring node considers that no signal is detected. Upon identifying a header of a data packet, the node receives and demodulates the data packet, and upon acquisition of a Length field in the data packet via demodulation, the node identifies an end boundary of the data packet.

**An energy detection** employs hardware integrated energy. Although the energy detection fails to identify a boundary of a data packet, it is capable of identifying energy in a data body and energy from other heterogeneous networks, such as Bluetooth^{®} devices, microwave ovens, or the like. This method directly uses energy received at a physical layer to determine a presence of a signal for access. In a case where the strength of the signal is greater than an energy detection threshold (denoted as "ED_threshold"), a channel is considered busy; and in a case where the strength of the signal is less than the energy detection threshold, the channel is considered idle.

**A short inter-frame space (SIFS)** is provided with a fixed value in the 802.11 series of wireless local area networks. The SIFS is the smallest interframe space, and thus an STA using the SIFS has the highest priority to access a wireless link. The SIFS is greater than or equal to time required for a node to transition from a Tx state to a Rx state and correctly decode data, or to transition from the Rx state to the Tx state. Data packets that may be transmitted after SIFS expires include acknowledgment (ACK) frames and clear-to-send (CTS) frames. The SIFS specified in different standards have different values.

**A PCF inter-frame space (PIFS)** refers to a mechanism where, under point coordination function (PCF), an AP waits for a PIFS instead of a distributed coordination function (DCF) inter-frame space (DIFS) to access a channel. Since DIFS > PIFS > SIFS, the AP always has a higher priority than ordinary nodes to access the channel.

**A DCF inter-frame space (DIFS)** refers to a mechanism where, in a DCF protocol, a node is required to monitor whether a channel is idle prior to the start of data transmission, and in a case where the channel is already idle, the node is still required to wait for a DIFS prior to the start of the data transmission; and in a case where the channel is detected to be busy at any time during the DIFS, the node has to postpone its data transmission.

**An overlapping basic service set (OBSS)** refers to another BSS that has overlapping channels with a current BSS. The OBSS may operate on the same channel or different channels, and helps to improve network congestion. For older versions of Wi-Fi, STAs attempting to connect to a network follow a "listen-before-talk" procedure, which means the STAs should first "listen" for noise on channels before transmitting. In a case where any noise is detected on a channel, devices wait until the channel is idle before transmitting to avoid potential interference even in a case where the noise originates from a remote network. An AP may use a "color" as a unique identifier of a network via the OBSS. In a case where a traffic having a different color from a local network is detected on a channel, devices may ignore the traffic and proceed with transmission. This enhances reliability and reduces latency. The OBSS enables more efficient communication on congested networks. As more and more devices require Wi-Fi connectivity, the OBSS helps to maintain speed and stability of the connection.

**Channel protection** is for a BSS where an STA may communicate with an AP but fail to detect other STAs or fails to be detected by other STAs, which may increase probability of transmission collisions. To avoid collisions, a monitoring STA, upon detecting transmission of another STA, sets a network allocation vector (NAV) timer for the transmission (regarded as performing virtual carrier sense (CS)), and monitors a radio frequency (RF) channel (regarded as performing physical CS). A request-to-send (RTS)/CTS mechanism helps to avoid collisions by implementing NAV distribution, which reserves transmission mediums for data frames prior to the start of data frame transmission.

An STA using the RTS/CTS mechanism is required to perform RTS/CTS interaction prior to normal data transmission each time the STA prepares to transmit a frame. Prior to transmitting a Data frame, a transmitter transmits an RTS frame; and all listening STAs reset their NAV timers based on a value of a duration of the RTS frame and wait for completion of the transmission of a CTS frame, a Data frame, and an ACK frame. A receiver then transmits a CTS frame which is also used for NAV distribution; and all listening STAs reset their NAV timers based on a value of a duration of the CTS frame and wait for completion of the transmission of the Data frame and the ACK frame.

Exemplarily, the value of the duration (in microseconds) of the RTS frame represents the time required to complete the exchange of the CTS frame, the Data frame, and the ACK frame, plus three short interframe spaces (SIFSs), and the value of the duration (in microseconds) of the CTS frame represents the time required to complete the exchange of the Data frame and the ACK frame, plus two SIFSs. Even in a case where an STA fails to detect the RTS frame, the STA should be able to detect the CTS frame. Regardless of which frame is detected, the terminal sets the NAV timer based on the provided value, and all STAs in a BSS set their NAV timers and wait for completion of the entire data transmission. This achieves a protection mechanism to avoid collisions.

In a case where devices compliant with different standards or technologies are present within the same BSS, a CTS-to-Self mechanism may also be used to avoid collisions. Compared with the RTS/CTS mechanism, The CTS-to-Self mechanism used as a protection mechanism for avoiding collisions is advantageous in that fewer frames are transmitted and the throughput is improved accordingly. An STA or AP utilizing the CTS-to-Self mechanism performs NAV distribution by transmitting a CTS frame with its own address as a receiver address (RA) in preparing for data transmission, and this CTS frame is referred to as the CTS-to-Self frame. The CTS frame informs all other STAs that they should wait for completion of the transmission of a Data frame and an ACK frame. All STAs that have detected the CTS frame set their NAV timers based on a value provided in the frame.

Basically, in a case where the RTS/CTS interaction is performed or the CTS-to-Self frame is the first frame for transmission, a Duration field in the RTS frame, the CTS frame, or the CTS-to-Self frame indicates a total duration of the transmission, which means that the Duration field is used to set a NAV value to protect channels.

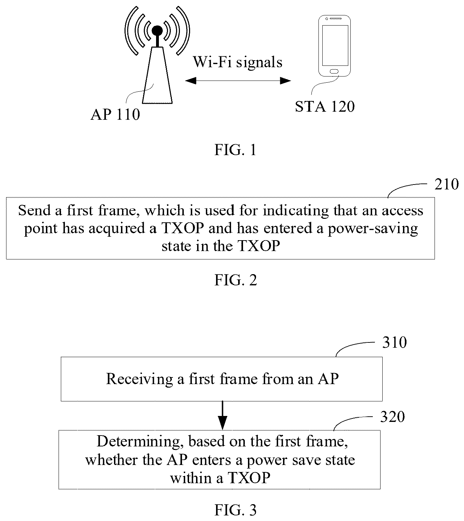

FIG. 1 is a schematic diagram of a wireless communication system according to some exemplary embodiments of the present disclosure. The wireless communication system involves terminal-to-terminal communication, terminal-to-network communication, or AP-to-STA communication, which is not limited in the present disclosure. The present disclosure is illustrated by using the communication system that includes communication between an AP 110 and an STA 120 as an example.

In some scenarios, an AP may also be referred to as an "AP STA," which means that an AP is also a type of STA in a sense.

In some embodiments, an STA may include an AP STA and a non-AP STA (abbreviated as STA).

Communication in the communication system may be conducted between an AP and an STA, between STAs, or between an STA and its peer STA. Herein, the peer STA may refer to a counterpart STA (device) that communicates with the STA. For example, the peer STA may be an AP or an STA.

The AP acts as a bridge connected between a wired network and a wireless network, and is mainly configured to connect wireless network clients and access the wireless network to the Ethernet. An AP device may be a terminal device equipped with a Wi-Fi chip, or a network device equipped with a Wi-Fi chip.

It should be understood that the role of the STA in the communication system is not particularly defined. For example, in some scenarios, in a case where a mobile phone is connected to a router, the mobile phone is an STA; or in a case where the mobile phone serves as a hotspot for other phones, the mobile phone acts as an AP.

The AP and the STA may be devices applied in Internet of vehicles (IoV), Internet of things (IoT) nodes, sensors, or the like in the IoT, smart cameras, smart remote controllers, smart water/electricity meters in smart homes, as well as sensors and similar devices in smart cities.

In some embodiments, the STA may support a plurality of current wireless local area network (WLAN) standards (such as 802.11be, 802.11ax, 802.11ac, 802.11n, 802.11g, 802.11b, and 802.11a) and future WLAN standards in the 802.11 family. The STA may also be applied in a network environment supporting a next-generation WLAN system, which evolves from the 802.11ax system and is backward compatible with the 802.11ax system. The next-generation Wi-Fi communication refers to any new-generation Wi-Fi communication following Wi-Fi 7 based on the IEEE 802.11be standard, such as UHR communication. For example, the STA is a UHR STA.

In some embodiments, the AP may be a device that supports a plurality of the current WLAN standards (such as 802.11be, 802.11ax, 802.11ac, 802.11n, 802.11g, 802.11b, and 802.11a) and future WLAN standards in the 802.11 family. The AP may also be applied in a network environment supporting a next-generation WLAN system, which evolves from the 802.11ax system and is backward compatible with the 802.11ax system. The next-generation Wi-Fi communication refers to any new-generation Wi-Fi communication following Wi-Fi 7 based on the IEEE 802.11be standard, such as UHR communication. For example, the AP is a UHR AP.

In the embodiments of the present disclosure, the STA may include one of the following devices that support the WLAN/Wi-Fi technology: a mobile phone, a tablet computer (such as a Pad), an e-book reader, a laptop computer, a desktop computer, a television (TV), a virtual reality (VR) device, an augmented reality (AR) device, a mediated reality (MR) device, an extended reality (XR) device, a baffle reality (BR) device, a cinematic reality (CR) device, a deceive reality (DR) device, a wireless device in industrial control, a set-top box, a wireless device in self-driving, a vehicle communication device, a wireless device in remote medical, a wireless device in smart grid, a wireless device in transportation safety, a wireless device in smart city, a wireless device in smart home, a wireless communication chip, an application-specific integrated circuit (ASIC), a system on chip (SoC), or the like.

The wireless communication system in the embodiments of the present disclosure may support frequency bands including but not limited to: millimeter-wave frequency bands (such as 45 GHz, 60 GHz, or the like, which belong to a frequency range from 30 to 300 GHz), and Sub-7 GHz frequency bands (such as 2.4 GHz, 5 GHz, 6 GHz, or the like, which belong to a frequency range from 1 to 7.25 GHz).

One or more links may be present between an STA and an AP.

In some embodiments, an STA and an AP support multi-band communication, such as simultaneous communication in at least one of 2.4 GHz, 5 GHz, 6 GHz, 45 GHz, 60 GHz, or other frequency bands, or simultaneous communication on different channels within the same or different frequency bands, to improve the communication throughput and/or reliability between devices. Such devices are typically referred to as multi-band devices or multi-link devices (MLDs), and sometimes referred to as multi-band entities or multi-link entities. An MLD may be an AP or an STA. In a case where the MLD is an AP, the MLD includes one or more APs. In a case where the MLD is an STA, the MLD includes one or more STAs.

An MLD including one or more APs is referred to as an AP MLD. An MLD including one or more STAs is referred to as a non-AP MLD or an STA MLD.

In some embodiments, a device operating in the millimeter-wave frequency band possesses multi-link operation (MLO) capabilities. In addition to an STA/AP in the millimeter-wave frequency band, at least one affiliated STA/AP operates in a low-frequency band, and device association and discovery procedures are conducted on the low-frequency band.

In some embodiments, STAs are present in the form of one or more BSSs. A BSS is a set of STAs that may successfully synchronize to communicate with each other. A BSS may or may not include an AP.

In some embodiments, an AP MLD may include a plurality of APs, and an STA MLD may include a plurality of STAs. A plurality of links may be formed between the APs in the AP MLD and the STAs in the STA MLD. Data communication may be conducted between the APs in the AP MLD and the STAs in the STA MLD via corresponding links.

In some embodiments, an AP is a device deployed in a WLAN/Wi-Fi system to provide wireless communication functions for STAs. An STA may be a user equipment (UE), an access terminal, a subscriber unit, a subscriber station, a mobile station, a remote station, a remote terminal, a mobile device, a wireless communication device, a user agent, or a user apparatus. In some embodiments, the STA may also be a cellular phone, a cordless phone, a Session Initiation Protocol (SIP) phone, a wireless local loop (WLL) station, a personal digital assistant (PDA), a handheld device with wireless communication functions, a computing device, any other processing device connected to a wireless modem, a vehicle-mounted device, or a wearable device, which are not limited in the present disclosure.

In some embodiments, both the AP and the STA support, but is not limited to, the IEEE 802.11 standard.

FIG. 2 is a schematic flowchart of an AP power-saving method according to some exemplary embodiments of the present disclosure. In a case where the method is performed by an AP, the method includes at least some of the following steps.

**In step 210,** the AP transmits a first frame, wherein the first frame is used to indicate that the AP has acquired a TXOP and is to enter a power save state within the TXOP.

In some embodiments, since at least one of a first STA or a second STA does not support a power-saving function, the first frame is used to indicate to the at least one of the first STA or the second STA that the AP has acquired the TXOP, to trigger the at least one of the first STA or the second STA to enter a silent state. Since a third STA supports the power-saving function, the first frame is used to indicate to the third STA that the AP has acquired the TXOP and is to enter the power save state within the TXOP, and to indicate related operations between the third STA and the AP in the power save state.

In some embodiments, the first frame is also used to instruct the first STA to remain silent for a first duration within the TXOP, wherein the first STA supports a first version of a communication protocol, the AP supports a second version of a communication protocol, and the second version is a subsequent evolution of the first version. Exemplarily, the first STA is a legacy STA that does not support the power-saving function. This power-saving function is an AP power-saving function according to the embodiments of the present disclosure. In some embodiments, this AP power-saving function is a power-saving function with per-TXOP granularity.

In some embodiments, the first frame is also used to instruct the second STA to remain silent for the first duration within the TXOP, and the second STA supports the second version of the communication protocol but does not support the power-saving function.

In some embodiments, the first duration is indicated by a Duration field carried in the first frame. Each STA, upon receiving the first frame, sets a duration of a NAV timer based on the first duration indicated by the Duration field. Within the first duration counted by the NAV timer, at least one of the first STA or the second STA that does not support the power-saving function remain in a silent state and does not actively perform any uplink transmission.

All the STAs mentioned in the embodiments of the present disclosure support normal reception of the first frame. At least one of the first STA or the second STA that does not support the power-saving function, upon receiving the first frame, is at least informed that the AP has acquired a TXOP. In such a case where the STA is incapable of understanding the indication that the AP is to enter the power save state within the TXOP due to lack of support for this power-saving function, the STA remains silent and does not perform any uplink transmission within the first duration. The third STA that supports the power-saving function, upon receiving the first frame, is informed that the AP has acquired the TXOP and is also informed that the AP is to enter the power save state within the TXOP. This enables the third STA to perform uplink and/or downlink data transmission with the AP within the TXOP duration.

In some embodiments, the first frame is a CTS-to-Self frame. In some embodiments, the first frame is a trigger frame. For example, the first frame is a Multi-User Request-to-Send (MU-RTS) trigger frame.

The first frame supports at least three different implementation modes for indicating that the AP is to enter the power save state within the TXOP. In different embodiments, at least one of three implementation modes as described hereinafter may be adopted.

**First mode (implicit indication):** The AP does not perform any downlink transmission within a predetermined duration following the first frame.

In a non-power-saving scenario, the AP performs down link transmission within the predetermined duration upon acquisition of the TXOP. However, in a power-saving scenario, the AP enters a power save state upon acquisition of the TXOP, and does not perform any downlink transmission within the predetermined duration.

**Second mode (explicit indication):** A value of a first bit in the first frame is a first value.

In some embodiments, the first frame is a CTS-to-Self frame, and the first bit is an individual bit or a group bit. In some embodiments, the first frame is a trigger frame, and the first bit is a bit in a Common Info field.

In some embodiments, the first value is 1. In some embodiments, the first value is 0.

**Third mode (explicit indication):** A first field in the first frame is null.

In some embodiments, the first frame is a trigger frame, and the first field is a User Info List field.

In some embodiments, the first frame is transmitted over a current maximum available bandwidth using at least one spatial stream; or the first frame is transmitted over a sub-channel corresponding to the power save state using at least one spatial stream.

In some embodiments, the current maximum available bandwidth includes: the sub-channel corresponding to the power save state; and all or part of sub-channels that remain idle within a predetermined duration prior to transmission of the first frame. Exemplarily, the sub-channel corresponding to the power save state is a single sub-channel.

In some embodiments, the first frame is carried in a first PPDU of the first version. Exemplarily, the first PPDU of the first version is a non-high throughput (non-HT) PPDU or a non-HT duplicate PPDU.

In some embodiments, the first frame is transmitted in a broadcast manner.

In view of the above, in the embodiments of the present disclosure, the first frame is transmitted and used to indicate that the AP has acquired the TXOP and is to enter a power save state within the TXOP. For STAs that do not support a power-saving function, the STAs determine, based on the first frame, that the AP has acquired the TXOP, and thus the STAs enter a silent state. This ensures that even in a case where the STAs do not support the power-saving function, the communication between the STAs and the AP remains unaffected, that is, no packet loss or connection loss occurs. For STAs that support the power-saving function, the STAs determine, based on the first frame, that the AP has acquired the TXOP and that the AP is to enter a power save state within the TXOP, such that the STAs are enabled to support related subsequent operations in the power save state.

FIG. 3 is a schematic flowchart of an AP power-saving method according to some exemplary embodiments of the present disclosure. In a case where the method is performed by a third STA, the method includes at least some of the following steps.

**In step 310,** the third STA receives a first frame from an AP.

In some embodiments, the third STA refers to at least one STA that supports a power-saving function. In some embodiments, the third STA supports a second version of a communication protocol.

In some embodiments, the first frame is used to indicate that the AP has acquired a TXOP and is to enter a power save state within the TXOP, and to indicate related operations between the third STA and the AP in the power save state, such as uplink and/or downlink data transmission.

For other characteristics of the first frame, reference may be made to the relevant description in step 210, which are not elaborated herein.

**In step 320,** the third STA determines, based on the first frame, whether the AP enters a power save state within a TXOP.

The first frame supports at least three different implementation modes for indicating that the AP is to enter the power save state within the TXOP. In different embodiments, at least one of the three implementation modes as described hereinafter may be adopted.

**First mode** (implicit indication): In a case where no downlink transmission is performed by the AP within a predetermined duration following the first frame, the third STA determines that the AP enters the power save state.

In a non-power-saving scenario, the AP performs down link transmission within the predetermined duration upon acquisition of the TXOP. However, in a power-saving scenario, the AP enters a power save state upon acquisition of the TXOP, and does not perform any downlink transmission within the predetermined duration.

In a case where the third STA detects no downlink transmission performed by the AP within the predetermined duration following the first frame, the third STA determines that the AP enters the power save state.

**Second mode** (explicit indication): A value of a first bit in the first frame is a first value.

In some embodiments, the first frame is a CTS-to-Self frame, and the first bit is an individual bit or a group bit. For example, the first frame is a CTS-to-Self frame; and an individual bit or a group bit in an RA of the CTS-to-Self frame is set to 1 to indicate that the AP enters the power save state within a current TXOP, or the individual bit or the group bit is set to 0 to indicate that the AP does not enter the power save state within the current TXOP.

In some embodiments, the first frame is a trigger frame, and the first bit is a bit in a Common Info field. For example, a reserved bit in a Common Info field of an MU-RTS trigger frame is set to 1 to indicate that the AP enters the power save state within a current TXOP, or the reserved bit is set to 0 to indicate that the AP does not enter the power save state within the current TXOP.

In some embodiments, the first value is 1. However, in other embodiments, the first value is 0.

Upon parsing a value of the first bit in the first frame as the first value, the third STA determines that the AP enters the power save state.

**Third mode** (explicit indication): A first field in the first frame is null.

In some embodiments, the first frame is a trigger frame, and the first field is a User Info List field.

Upon parsing the first field in the first frame as 'Null,' the third STA determines that the AP enters the power save state.

In view of the above, in the method according to the embodiments of the present disclosure, the third STA that supports the power-saving function determines, based on the first frame, that the AP acquires a TXOP and enters a power save state within the TXOP. This allows the third STA to support related subsequent operations in the power save state (such as uplink data transmission and/or downlink data transmission) upon being informed that the AP enters the power save state.

### For STAs that do not support a power-saving function:

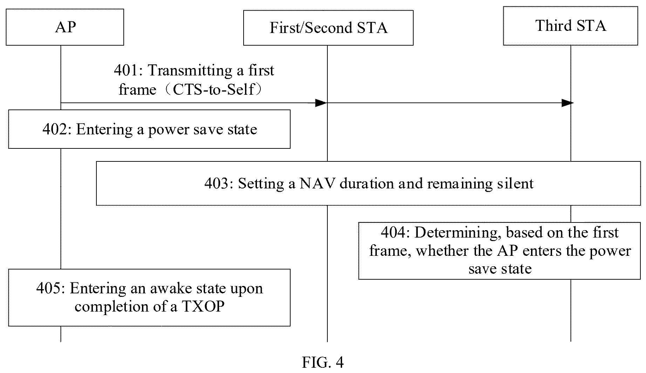

FIG. 4 is a schematic flowchart of an AP power-saving method according to some exemplary embodiments of the present disclosure. In a case where the method is performed by an AP and an STA (e.g., at least one of a first STA, a second STA, or a third STA), the method includes at least some of the following steps.

**In step 401,** the AP transmits a first frame to the STA.

The AP may acquire a TXOP using a predefined enhanced distributed channel access (EDCA) parameter or any EDCA parameter.

Upon acquisition of the TXOP via contention, the AP transmits the first frame to each STA, wherein the first frame is used to indicate that the AP has acquired the TXOP and is to enter a power save state within the TXOP.

Correspondingly, the STA receives the first frame from the AP. The first frame carries a first duration. For example, a Duration field in the first frame indicates the first duration.

For the introduction of relevant characteristics of the first frame, reference may be made to the description in step 210, which is not elaborated herein.

**In step 402,** the AP enters a power save state.

Upon contention or acquisition of the TXOP, the AP may choose to enter a power save state or not to enter a power save state. In some embodiments, the AP determines whether to enter the power save state based on at least one of the following factors.

Factor 1: Whether data is present for downlink transmission.

Factor 2: Whether the traffic in a current time period is busy.

In some embodiments, the AP enters the power save state in a case where no data is present for downlink transmission. In some embodiments, the AP enters the power save state in a case where the busyness of the traffic in the current time period is less than a threshold. In some embodiments, the AP enters the power save state in a case where no data is present for downlink transmission and the busyness of the traffic in the current time period is less than a threshold.

The implementation mode for the AP to determine whether to enter the power save state within the current TXOP is not limited in the embodiments of the present disclosure. The implementation mode may be specified in a communication protocol, pre-configured by a user, or independently determined by a manufacturer.

**In step 403,** the first STA or the second STA remains silent for a set NAV duration.

At least one of the first STA or the second STA sets a NAV duration based on the first duration, remains silent for the NAV duration, and does not actively perform uplink transmission.

**In step 404,** the third STA determines, based on the first frame, whether the AP enters the power save state.

The third STA confirms that the AP enters the power save state in one of the following scenarios: no downlink transmission is performed by the AP within a predetermined duration following the first frame; a value of a first bit in the first frame is a first value; or a first field of the first frame is null.

**In step 405,** upon completion of the TXOP, the AP enters an awake state.

Upon completion of the TXOP, the AP transitions from the power save state to the awake state. In addition, at least one of the first STA or the second STA exits the silent mode.

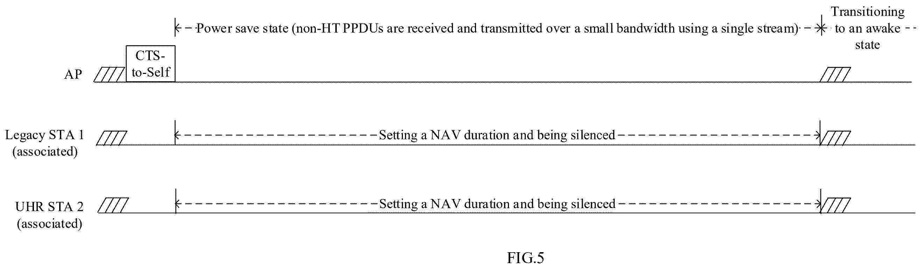

With reference to FIG. 5, the first frame may be a CTS-to-Self frame or a trigger frame. Upon acquisition of the TXOP, the AP transmits a PPDU carrying the first frame to each STA, and then enters the power save state. Within a BSS where a first STA (STA1) and a second STA (STA2) that have established associations with the AP, STA1 and STA2 remain silent for an NAV duration, and do not initiate any uplink transmission to the AP within the NAV duration. Upon completion of the TXOP, the AP transitions from the power save state to the awake state.

In view of the above, in the method according to the embodiments, the first frame is transmitted and used to indicate that the AP has acquired the TXOP and is to enter the power save state within the TXOP. For STAs that do not support the power-saving function, the STAs determine, based on the first frame, that the AP has acquired the TXOP, and thus the STAs enter the silent state. This ensures that even in a case where the STAs do not support the power-saving function, the communication between the STAs and the AP remains unaffected, that is, no packet loss or connection loss occurs.

### For uplink transmission of STAs that support a power-saving function:

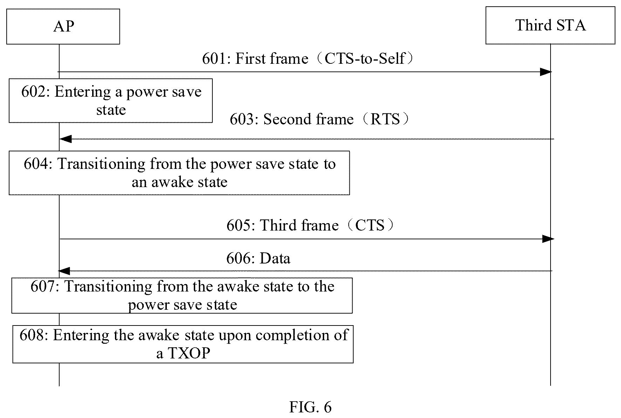

FIG. 6 is a schematic flowchart of an AP power-saving method according to some exemplary embodiments of the present disclosure. In a case where the method is performed by an AP and a third STA, the method includes at least some of the following steps.

**In step 601,** the AP transmits a first frame to the third STA.

The AP transmits a first PPDU carrying the first frame to the third STA. The first PPDU employs a PPDU format of a first version. The first frame may be a CTS-to-Self frame or a trigger frame.

In some embodiments, the first PPDU is transmitted over a current maximum available bandwidth using at least one spatial stream (e.g., a plurality of streams). In some embodiments, the first PPDU is transmitted over a sub-bandwidth corresponding to a power save state and at least one spatial stream (e.g., a single stream).

**In step 602,** the AP enters a power save state.

Upon transmitting the first frame, the AP transitions from an awake state to the power save state.

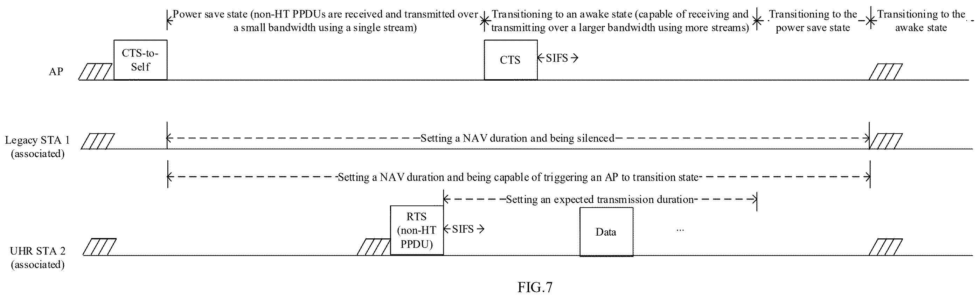

With reference to FIG. 7, the AP transmits the first frame and then enters the power save state. In this state, the AP receives and transmits non-HT PPDUs over a sub-bandwidth corresponding to the power save state using at least one spatial stream, wherein the sub-bandwidth corresponding to the power save state adopts a smaller bandwidth (e.g., 20 MHz or 40 MHz).

Correspondingly, the third STA receives the first frame, and the third STA determines, based on the first frame, whether the AP enters the power save state. For relevant description, reference may be made to the description in step 320 and/or step 404, which is not elaborated herein.

**In step 603,** the third STA transmits a second frame to the AP.

The third STA refers to at least one STA that supports the power-saving function. Even in a case where the AP is in the power save state, the third STA is still capable of performing uplink transmission with the AP. Within the TXOP acquired by the AP via contention, the third STA may transmit the second frame in a case where the third STA gains access to a transmission medium or channel using an EDCA mechanism. The second frame is carried in a second PPDU of the first version.

In some embodiments, with reference to the example in FIG. 7, the second frame is an RTS frame. In some embodiments, the second frame is a control frame. The embodiments are illustrated by using an example where the second frame is an RTS frame.

In some embodiments, the second PPDU is a PPDU of the first version, or employs a PPDU format of the first version, such as a non-HT PPDU or a non-HT duplicate PPDU.

In some embodiments, a Duration field in the second frame indicates an expected transmission duration of the third STA (referred to as a second duration). That is, the second frame carries the second duration, which is the expected transmission duration of the third STA within the TXOP. The time indicated by a sum of the end time of the second frame and the second duration shall not be later than the time indicated by a sum of the end time of the first frame and the first duration. That is, the expected transmission of the third STA shall be completed prior to the end of the TXOP.

**In step 604,** the AP transitions from the power save state to the awake state.

The AP, upon receiving the second frame from the third STA within the TXOP, transitions from the power save state to the awake state.

In some embodiments, a certain amount of time is required for an AP to transition from the power save state to the awake state, which varies depending on the performance of the AP. Some APs require a longer time to complete the transition from the power save state to the awake state. The AP may pre-indicate the required state transition time in a Beacon frame and/or a Probe Response frame, for example, via configuration related to 'switch delay'. Based on the state transition time, the third STA may add padding in the second frame (for example, add padding in a newly defined control frame) and/or add padding in the PPDU carrying the second frame (for example, use a packet extension (PE) field of 4, 8, 12, or 16 microseconds).

That is, the second frame or the second PPDU carrying the second frame is provided with a padding field, which is determined based on the state transition time of the AP. The state transition time is used to indicate the time required for the AP to transition from the power save state to a normal state (e.g., the awake state).

**In step 605,** the AP transmits a third frame to the third STA.

The third frame is used to indicate that the AP has transitioned from the power save state to the awake state, and/or the third frame is used to indicate an agreement to uplink data transmission of the third STA.

In some embodiments, with reference to the example in FIG. 7, the third frame is a CTS frame.

In some embodiments, the AP transmits the third frame to the STA following an SIFS after receiving the second frame.

In some embodiments, an initial PPDU first transmitted by the AP after transitioning from the power save state to the awake state is required to be a non-HT duplicate PPDU. The initial PPDU may be a third PPDU carrying the CTS frame. In addition, this PPDU is transmitted over a current maximum available bandwidth using at least one stream to occupy the transmission medium, ensuring that a larger transmission bandwidth is available for subsequent transmissions in the awake state.

In some embodiments, the current maximum available bandwidth is determined as follows: a channel with the largest bandwidth is formed by a sub-channel used by the AP in the power save state and another sub-channel that remains idle within a PIFS or DIFS prior to transmitting the initial PPDU.

**In step 606,** the third STA transmits data to the AP.

In some embodiments, the third STA transmits uplink data to the AP following a predetermined interval after receiving the third frame. The predetermined interval may be any one of: an SIFS, a PIFS, or a DIFS. The embodiments are illustrated by using an example where the interval is the SIFS.

**In step 607,** the AP transitions from the awake state to the power save state.

Prior to completion of the TXOP, the AP may transition from the awake state back to the power save state upon completion of the uplink data transmission by the third STA.

**In step 608,** upon completion of the TXOP, the AP enters the awake state.

Upon completion of the TXOP, the AP transitions from the power save state to the awake state. In addition, at least one of the first STA or the second STA exits the silent mode.

In view of the above, in the method according to the embodiments, the third STA that supports the power-saving function determines, based on the first frame, that the AP has acquired a TXOP and enters a power save state within the TXOP. This allows the third STA to support related subsequent operations in the power save state (such as uplink data transmission and/or downlink data transmission) upon being informed that the AP enters the power save state.

The method according to the embodiments allows the third STA to restore the AP to the awake state via the second frame, and then transmit uplink data to the AP, such that the uplink data transmission of the third STA is implemented within the TXOP.

In the method according to the embodiments, a padding field is added in the second frame or the second PPDU, ensuring that the AP has sufficient time to transition from the power save state to the awake state.

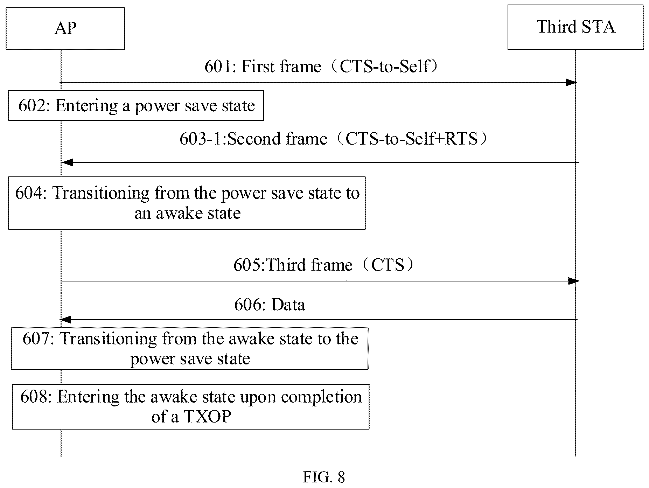

To ensure that the AP has sufficient time to transition from the power save state to the awake state, step 603 as described above may be replaced with step 603-1 according to the embodiment as illustrated in FIG. 8, which is different from that as illustrated in FIG. 6.

**In step 603-1,** the third STA transmits a second frame to the AP.

The third STA refers to at least one STA that supports dynamic power saving. The third station may transmit the second frame in a case where the third STA gains access to a transmission medium or channel using an EDCA mechanism. In the embodiments, the second frame includes at least two frames.

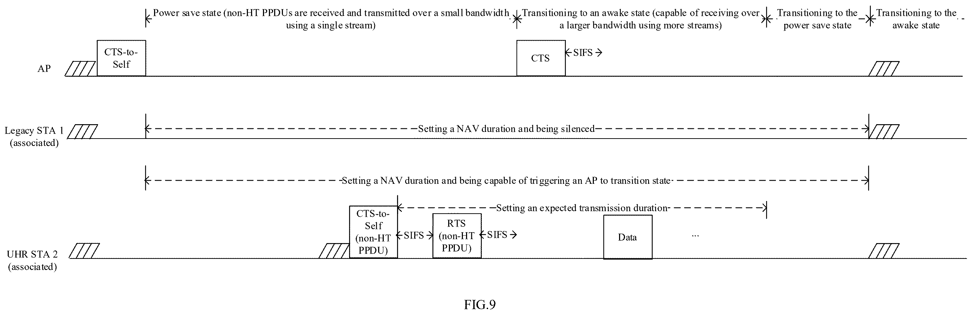

In some embodiments, with reference to an example in FIG. 9, at least two frames include two frames, i.e., a CTS-to-Self frame and an RTS frame. In a case where the third STA gains access to a transmission medium or channel using an EDCA mechanism, the third STA first transmits the CTS-to-Self frame; and following an SIFS, the third STA transmits the RTS frame.

In some embodiments, in a case where the second frame includes at least two frames, all or part of the at least two frames (or a PPDU carrying the second frame) also carry padding fields to further reserve time for the AP.

In view of the above, in the method according to the embodiments, the second frame includes at least two frames, such that "at least two frames plus at least two SIFSs" are provided for state transition of the AP. This ensures that the AP has sufficient time to transition from the power save state to the awake state.

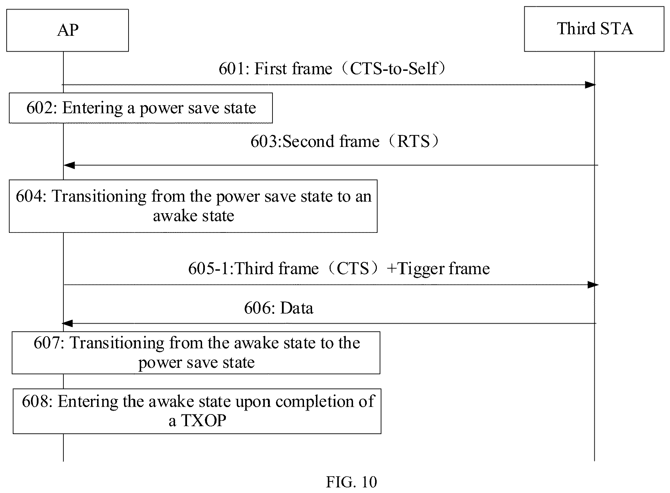

To maintain uplink and/or downlink scheduling of the AP within the TXOP, step 605 as described above may be replaced with step 605-1 according to the embodiment as illustrated in FIG. 10, which is different from that as illustrated in FIG. 6.

**In step 605-1,** the AP sequentially transmits a third frame and a trigger frame to the third STA.

The third frame is used to indicate that the AP has transitioned from the power save state to the awake state, and the trigger frame is used to trigger the third STA to initiate uplink data transmission.

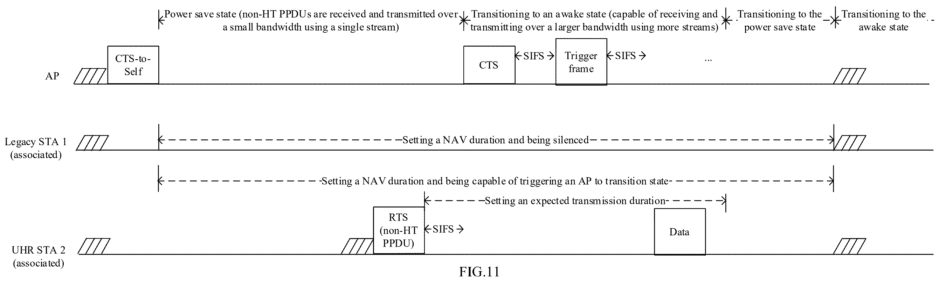

In some embodiments, with reference to FIG. 11, the AP, upon receiving the second frame, first transmits a third frame; and following an SIFS, the AP transmits a trigger frame. In some embodiments, the third frame is a CTS frame. Upon receiving the trigger frame, the third STA transmits uplink data to the AP.

In view of the above, in the method according to the embodiments, the AP first transmits the third frame and then transmits the trigger frame, such that the uplink and/or downlink scheduling of the AP is maintained within the TXOP.

### For downlink transmission of STAs that support the power-saving function:

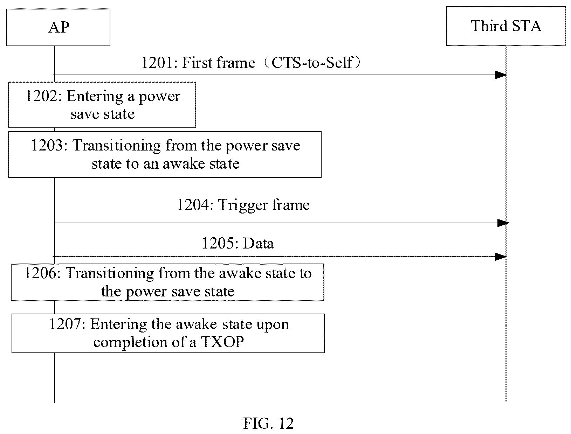

FIG. 12 is a schematic flowchart of an AP power-saving method according to some exemplary embodiments of the present disclosure. In a case where the method is performed by an AP and a third STA, the method includes at least some of the following steps.

**In step 1201,** the AP transmits a first frame to the third STA.

The AP transmits a first PPDU carrying the first frame to the third STA. The first PPDU employs a PPDU format of a first version. The first frame may be a CTS-to-Self frame or a trigger frame.

In some embodiments, the first PPDU is transmitted over a current maximum available bandwidth using at least one spatial stream (e.g., a plurality of streams). In some embodiments, the first PPDU is transmitted over a sub-bandwidth corresponding to a power save state using at least one spatial stream (e.g., a single stream).

**In step 1202,** the AP enters a power save state.

Upon transmitting the first frame, the AP transitions from an awake state to the power save state.

**In step 1203,** the AP transitions from the power save state to the awake state.

In a case where data is present within a TXOP for downlink transmission, the AP transitions from the power save state to the awake state to perform the downlink transmission of the data to the third STA.

**In step 1204,** the AP transmits a trigger frame to the third STA.

The trigger frame is used to indicate to the third STA that the AP is to transmit downlink data to the third STA. In some embodiments, the trigger frame also indicates a third duration, which is an expected transmission duration of the AP.

Within the TXOP, upon receiving data for downlink transmission (especially low-latency data) from a distribution system (DS), the AP may actively transition from the power save state to the awake state and initiate downlink transmission, and transition back to the power save state upon completion of the downlink transmission. To avoid OBSS interference, the AP is required to perform CCA detection prior to the initiation of the downlink transmission, and may only perform the transmission in a case where a channel is idle within a PIFS or DIFS.

**In step 1205,** the AP transmits data to the third STA.

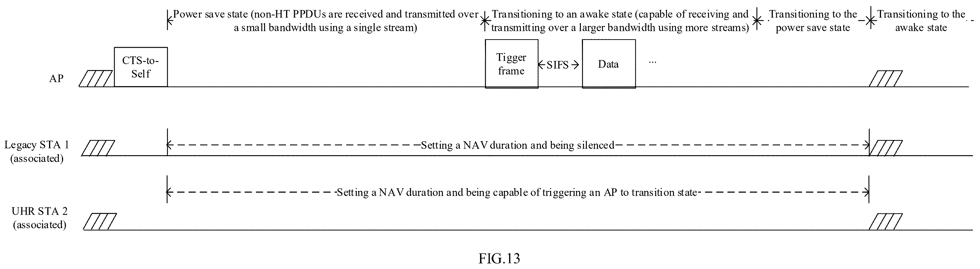

In some embodiments, with reference to FIG. 13, the AP transmits downlink data to the third STA following a predetermined interval after transmitting the trigger frame. The predetermined interval may be any one of: an SIFS, a PIFS, or a DIFS. The embodiments are illustrated by using an example where the interval is the SIFS.

**In step 1206,** the AP transitions from the awake state to the power save state.

Upon completion of the downlink data transmission, the AP transitions back from the awake state to the power save state.

**In step 1207,** upon completion of the TXOP, the AP enters the awake state.

Upon completion of the TXOP, the AP transitions from the power save state to the awake state. In addition, at least one of the first STA or the second STA exits the silent mode.

In view of the above, in the method according to the embodiment, the third STA that supports the power-saving function determines, based on the first frame, that the AP has acquired a TXOP and enters a power save state within the TXOP. This allows the third STA to support related subsequent operations in the power save state (such as uplink data transmission and/or downlink data transmission) upon being informed that the AP enters the power save state.

The method according to the embodiments allows the AP to restore from the power save state to the awake state in a case where data is present for downlink transmission, and to transmit the downlink data to the third STA, thereby enabling the downlink data transmission to the third STA within a TXOP.

### For STAs to be associated:

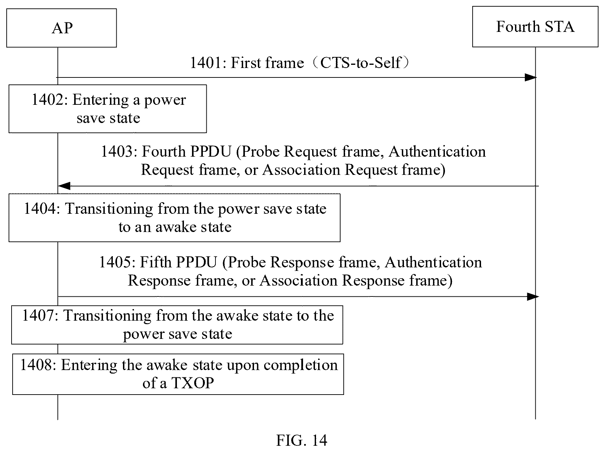

FIG. 14 is a schematic flowchart of an AP power-saving method according to some exemplary embodiments of the present disclosure. In a case where the method is performed by an AP and a fourth STA, the method includes at least some of the following steps.

**In step 1401,** the AP transmits a first frame to the fourth STA.

The fourth STA may or may not support a power-saving function.

Upon acquisition of a TXOP, the AP broadcasts the first frame; and in a case where a fourth STA is already within a service coverage of the AP, the fourth STA has capabilities to receive the first frame, or in a case where the fourth STA is not within the service coverage of the AP, the fourth STA fails to receive the first frame.

**In step 1402,** the AP enters a power save state.

Upon transmission of the first frame, the AP transitions from an awake state to the power save state.

**In step 1403,** the fourth STA transmits a fourth PPDU to the AP.

Even in a case where the AP is in the power save state, the fourth STA is still capable of completing operations such as probing, scanning, authentication, or association with the AP.

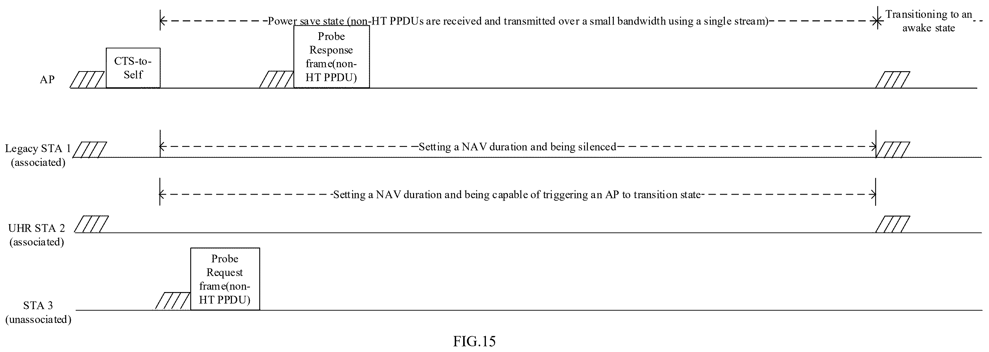

In some embodiments, with reference to FIG. 15, within the TXOP, at least one new to-be-associated STA (referred to as the fourth STA), upon acquisition of a medium access opportunity via contention using an EDCA mechanism, transmits a Probe Request frame using a non-HT PPDU or non-HT duplicate PPDU. Accordingly, the AP may respond to the Probe Request frame with a non-HT PPDU carrying a Probe Response frame.

In a case where the fourth STA transmits an Authentication Request frame and/or an Association Request frame using a non-HT PPDU or non-HT duplicate PPDU, the AP responds with an Authentication Response frame and/or an Association Response frame using a non-HT PPDU or non-HT duplicate PPDU, and transitions from the power save state to the awake state. The transition may be performed before or after the response, because the response may be transmitted well beyond an SIFS, providing sufficient time for the AP to complete the transition from the power save state to the awake state. In a case where the AP has transitioned from the power save state to the awake state, the AP may perform receive and transmit operations using a currently available larger bandwidth and/or a plurality of streams.

In some embodiments, within a TXOP, in a case where at least one third STA and/or at least one fourth STA within a BSS that supports the AP dynamic power-saving function acquires a medium access opportunity via contention using an EDCA mechanism, the STA may interact with the AP using non-HT PPDUs or non-HT duplicate PPDUs. The AP does not transition to the awake state but remains in the power save state and interacts with the at least one third STA and/or the at least one fourth STA over a power-saving Rx/Tx channel. This method has lower transmission efficiency but saves more power.

**In step 1404,** the AP transitions from the power save state to the awake state.

In a case where the fourth STA transmits a Probe Request frame, the AP may reply with a Probe Response frame without transitioning from the power save state to the awake state.

In a case where the fourth STA transmits an Authentication Request frame or an Association Request frame, the AP transitions from the power save state to the awake state.

**In step 1405,** the AP transmits a fifth PPDU to the fourth STA.

Upon receiving the fourth PPDU of the first version from the fourth STA within the TXOP, the AP replies to the fourth STA with a fifth PPDU of the first version. The fourth STA is a to-be-associated STA that supports the first version or the second version. The AP responds with a corresponding frame based on the frame from the fourth STA, which includes at least one of the following situations.
- The fourth PPDU carries a Probe Request frame, and the fifth PPDU carries a Probe Response frame.
- The fourth PPDU carries an Authentication Request frame, and the fifth PPDU carries an Authentication Response frame.
- The fourth PPDU carries an Association Request frame, and the fifth PPDU carries an Association Response frame.

**In step 1407,** the AP transitions from the awake state to the power save state.

Upon completion of the interaction with the fourth STA, the AP transitions from the power save state to the awake state.

**In step 1408,** upon completion of the TXOP, the AP enters the awake state.

Upon completion of the TXOP, the AP transitions from the power save state to the awake state. In addition, at least one of the first STA or the second STA also exits the silent mode.

In some embodiments, an AP MLD may enable one link to remain in the awake state at all times to interact with a first STA, and/or a second STA that does not support the AP dynamic power-saving function in the BSS, and/or at least one new fourth STA to be associated, and enable the dynamic power-saving function for at least one remaining link. In this case, the AP MLD may only process the interaction with the third STA on the at least one remaining link, without processing the interaction with the first STA and/or the second STA and/or the fourth STA on the at least one remaining link.

In view of the above, in the method according to the embodiments, the AP performs at least one of operations such as probing, scanning, authentication, or association with a newly STA to be associated, even in a case where the AP is in a power save state.

**For changes during the above steps in terms of channel, bandwidth, and stream:**
In a power save state, a sub-channel and bandwidth corresponding to the power save state used by the AP (referred to as a power-saving Rx/Tx channel, a low-power Rx/Tx channel, a primary 20 MHz sub-channel, or a primary 40 MHz sub-channel) are predefined by a communication protocol or pre-broadcast by the AP in a Beacon frame.

Option 1: The AP may use a current maximum available bandwidth and one spatial stream to transmit a non-HT PPDU (in a case where the bandwidth is 20 MHz) or a non-HT duplicate PPDU (in a case where the bandwidth is greater than 20 MHz) carrying the first frame. A third STA of a second version that supports the AP dynamic power-saving function uses the sub-channel corresponding to the power save state to transmit a non-HT PPDU carrying a second frame (e.g., an RTS frame).

Option 2: The AP may only use a sub-channel corresponding to the power save state and one spatial stream to transmit a non-HT PPDU (in a case where a bandwidth is 20 MHz) or a non-HT duplicate PPDU (in a case where a bandwidth is greater than 20 MHz) carrying the first frame. A third STA of a second version that supports the AP dynamic power-saving function uses the sub-channel corresponding to the power save state to transmit a non-HT PPDU carrying a second frame.

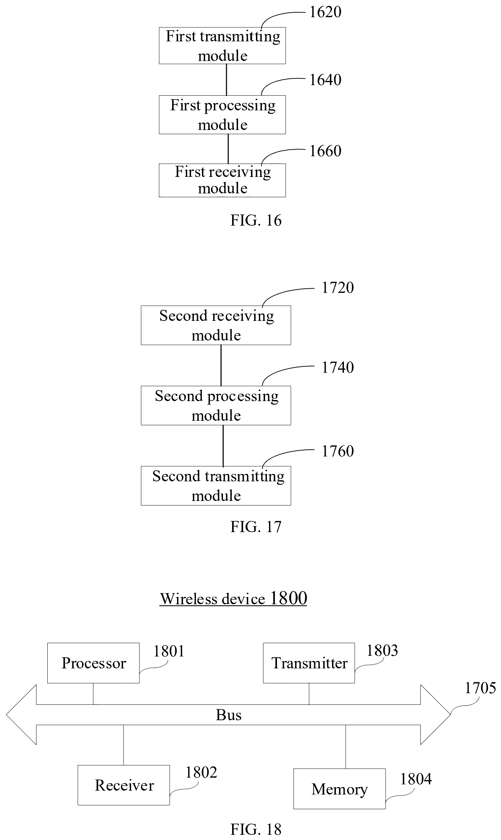

FIG. 16 is a structural block diagram of an AP power-saving apparatus according to some exemplary embodiments of the present disclosure. The apparatus includes at least some of: a transmitting module 1620, a processing module 1640, and a receiving module 1660:
The transmitting module 1620 is configured to transmit a first frame, wherein the first frame is used to indicate that the AP has acquired a TXOP and is to enter a power save state within the TXOP.

In some embodiments, since at least one of a first STA or a second STA does not support a power-saving function, the first frame is used to indicate to the at least one of the first STA or the second STA that the apparatus has acquired the TXOP, to trigger the at least one of the first STA or the second STA to enter a silent state. Since a third STA supports the power-saving function, the first frame is used to indicate to the third STA that the apparatus has acquired the TXOP and is to enter the power save state within the TXOP, and to indicate related operations between the third STA and the AP in the power save state.

In some embodiments, the first frame is also used to instruct the first STA to remain silent for a first duration within the TXOP, wherein the first STA supports a first version of a communication protocol, the AP supports a second version of a communication protocol, and the second version is a subsequent evolution of the first version. Exemplarily, the first STA is a legacy STA that does not support the power-saving function. This power-saving function is an AP power-saving function according to the embodiments of the present disclosure. In some embodiments, this AP power-saving function is a power-saving function with per-TXOP granularity.

In some embodiments, the first frame is also used to instruct the second STA to remain silent for the first duration within the TXOP, and the second STA supports the second version of the communication protocol but does not support the power-saving function.

In some embodiments, the first duration is indicated by a Duration field carried in the first frame. Each STA, upon receiving the first frame, sets a duration of a NAV timer based on the first duration indicated by the Duration field. Within the first duration counted by the NAV timer, at least one of the first STA or the second STA that does not support the power-saving function remain in a silent state and does not actively perform any uplink transmission.

All the STAs mentioned in the embodiments of the present disclosure support normal reception of the first frame. At least one of the first STA or the second STA that does not support the power-saving function, upon receiving the first frame, is at least informed that the apparatus has acquired a TXOP. In such a case where the STA is incapable of understanding the indication that the apparatus is to enter the power save state within the TXOP due to lack of support for this power-saving function, it remains silent and does not perform any uplink transmission within the first duration. The third STA that supports the power-saving function, upon receiving the first frame, is informed that the apparatus\ has acquired the TXOP and is also informed that the apparatus is to enter the power save state within the TXOP. This enables the third STA to perform uplink and/or downlink data transmission with the apparatus within the TXOP duration.

In some embodiments, the first frame is a CTS-to-Self frame. In some embodiments, the first frame is a trigger frame. For example, the first frame is an MU-RTS trigger frame.

The first frame supports at least three different implementation modes for indicating that the apparatus is to enter the power save state within the TXOP. In different embodiments, at least one of three implementation modes as described hereinafter may be adopted.

**First mode (implicit indication):** The apparatus does not perform any downlink transmission within a predetermined duration following the first frame.

In a non-power-saving scenario, the apparatus performs down link transmission within the predetermined duration upon acquisition of the TXOP. However, in a power-saving scenario, the apparatus enters a power save state upon acquisition of the TXOP, and does not perform any downlink transmission within the predetermined duration.

**Second mode (explicit indication):** A value of a first bit in the first frame is a first value.

In some embodiments, the first frame is a CTS-to-Self frame, and the first bit is an individual bit or a group bit. In some embodiments, the first frame is a trigger frame, and the first bit is a bit in a Common Info field.

In some embodiments, the first value is 1. In some embodiments, the first value is 0.

**Third mode (explicit indication):** A first field in the first frame is null.

In some embodiments, the first frame is a trigger frame, and the first field is a User Info List field.

In some embodiments, the first frame is transmitted over a current maximum available bandwidth using at least one spatial stream; or the first frame is transmitted over a sub-channel corresponding to the power save state using at least one spatial stream.

In some embodiments, the current maximum available bandwidth includes: the sub-channel corresponding to the power save state; and all or part of sub-channels that remain idle within a predetermined duration prior to the transmission of the first frame. Exemplarily, the sub-channel corresponding to the power save state is a single sub-channel.

In some embodiments, the first frame is carried in a first PPDU of the first version. Exemplarily, the first PPDU of the first version is a non-HT PPDU or a non-HT duplicate PPDU.

In some embodiments, the first frame is transmitted in a broadcast manner.

The receiving module 1660 is configured to receive a second frame from a third STA.

The third STA refers to at least one STA that supports the power-saving function. Even in a case where the apparatus is in the power save state, the third STA is still capable of performing uplink transmission with the apparatus. Within the TXOP acquired by the apparatus via contention, the third STA may transmit the second frame in a case where the third STA gains access to a transmission medium or channel using an EDCA mechanism. The second frame is carried in a second PPDU of the first version.

In some embodiments, with reference to the example in FIG. 7, the second frame is an RTS frame. In some embodiments, the second frame is a control frame. The embodiments are illustrated by using an example where the second frame is an RTS frame.

In some embodiments, the second PPDU is a PPDU of the first version, or employs a PPDU format of the first version, such as a non-HT PPDU or a non-HT duplicate PPDU.

In some embodiments, a Duration field in the second frame indicates an expected transmission duration of the third STA. That is, the second frame carries the second duration, which is the expected transmission duration of the third STA within the TXOP. The time indicated by a sum of the end time of the second frame and the second duration shall not be later than the time indicated by a sum of the end time of the first frame and the first duration. That is, the expected transmission of the third STA shall be completed prior to the end of the TXOP.

The processing module 1640 is configured to transition from the power save state to the awake state upon receiving the second frame from the third STA within the TXOP.

The apparatus, upon receiving the second frame from the third STA within the TXOP, transitions from the power save state to the awake state.

In some embodiments, a certain amount of time is required for the apparatus to transition from the power save state to the awake state. Some apparatuses require a longer time to complete the transition from the power save state to the awake state. The apparatus may pre-indicate the required state transition time in a Beacon frame and/or a Probe Response frame. Based on the state transition time, the third STA may add padding in the second frame and/or add padding in the PPDU carrying the second frame.

That is, the second frame or the second PPDU carrying the second frame is provided with a padding field, which is determined based on the state transition time of the apparatus. The state transition time is used to indicate the time required for the apparatus to transition from the power save state to a normal state (e.g., the awake state).

The third STA supports both the second version of the communication protocol and the power-saving function.

In some embodiments, the second frame carries a second duration, wherein the second duration is an expected transmission duration of the third STA within the TXOP. In some embodiments, a Duration field in the second frame indicates the expected transmission duration of the third STA. That is, the second frame carries the second duration, wherein the second duration is the expected transmission duration of the third STA within the TXOP. The time indicated by a sum of the end time of the second frame and the second duration shall not be later than the time indicated by a sum of the end time of the first frame and the first duration. That is, the expected transmission of the third STA shall be completed prior to the end of the TXOP.

In some embodiments, the second frame is an RTS frame or a control frame. In some embodiments, with reference to the example in FIG. 7, the second frame is an RTS frame. In some embodiments, the second frame is a control frame. The embodiments are illustrated by using an example where the second frame is an RTS frame.

In some embodiments, the second frame is carried in a second PPDU of the first version. In some embodiments, the second PPDU is a PPDU of the first version, or employs a PPDU format of the first version, such as a non-HT PPDU or a non-HT duplicate PPDU.

In some embodiments, the second frame or the second PPDU carrying the second frame includes a padding field determined based on a state transition time of the apparatus. The state transition time is the time required for the apparatus to transition from the power save state to the awake state.

The transmitting module 1620 is configured to transmit a Beacon frame, wherein the Beacon frame carry indication information of the state transition time.

In some embodiments, a certain amount of time is required for the apparatus to transition from the power save state to the awake state. Some apparatuses require a longer time to complete the transition from the power save state to the awake state. The apparatus may pre-indicate the required state transition time in a Beacon frame and/or a Probe Response frame. Based on the state transition time, the third STA may add padding in the second frame and/or add padding in the PPDU carrying the second frame.

That is, the second frame or the second PPDU carrying the second frame is provided with a padding field, which is determined based on the state transition time of the AP. The state transition time is used to indicate the time required for the apparatus to transition from the power save state to a normal state (e.g., the awake state).

In some embodiments, the second PPDU carrying the second frame is a sequence of at least two PPDUs.

The transmitting module 1620 is configured to transmit a third frame to the third STA, wherein the third PPDU is used to indicate that the apparatus has transitioned to the awake state.

The third frame is used to indicate that the apparatus has transitioned from the power save state to the awake state, and/or the third frame is used to indicate an agreement to uplink data transmission of the third STA.

In some embodiments, with reference to the example in FIG. 7, the third frame is a CTS frame.

In some embodiments, the apparatus transmits the third frame to the STA following an SIFS after receiving the second frame.

In some embodiments, an initial PPDU first transmitted by the AP after transitioning from the power save state to the awake state is required to be a non-HT duplicate PPDU. In addition, this PPDU is transmitted over a current maximum available bandwidth using at least one stream to occupy the transmission medium, ensuring that a larger transmission bandwidth is available for subsequent transmissions in the awake state.

In some embodiments, the current maximum available bandwidth is determined as follows: a channel with the largest bandwidth is formed by a sub-channel used by the apparatus in the power save state and another sub-channel that remains idle within a PIFS or DIFS prior to transmission of the initial PPDU.

In some embodiments, the third frame is carried in a third PPDU of the first version.

The transmitting module 1620 is further configured to transmit a trigger frame to the third STA, wherein the trigger frame is used to instruct the third STA to transmit data.

The third frame is used to indicate that the AP has transitioned from the power save state to the awake state, and the trigger frame is used to trigger the third STA to initiate uplink data transmission.

In some embodiments, with reference to FIG. 11, upon receiving the second frame, the apparatus first transmits a third frame; and following an SIFS, the apparatus transmits a trigger frame. In some embodiments, the third frame is a CTS frame. Upon receiving the trigger frame, the third STA transmits uplink data to the apparatus.

The processing module 1640 is configured to transition from the awake state to the power save state upon completion of data transmission of the third STA.

Prior to completion of the TXOP, the apparatus may transition from the awake state back to the power save state upon completion of the uplink data transmission by the third STA.

The transmitting module 1620 is further configured to, in a case where data is present within the TXOP for downlink transmission, transition from the power save state to an awake state and performing the downlink transmission of the data.

FIG. 12 is a schematic flowchart of an apparatus power-saving method according to some exemplary embodiments of the present disclosure. In a case where the method is performed by an apparatus and a third STA, the method includes at least some of the following steps.

The apparatus transmits a first frame to the third STA.

The apparatus transmits a first PPDU carrying the first frame to the third STA. The first PPDU employs a PPDU format of a first version. The first frame may be a CTS-to-Self frame or a trigger frame.

In some embodiments, the first PPDU is transmitted over a current maximum available bandwidth using at least one spatial stream. In some embodiments, the first PPDU is transmitted over a sub-bandwidth corresponding to a power save state using at least one spatial stream.

The transmitting module is configured for the apparatus to enter a power save state.

Upon transmitting the first frame, the apparatus transitions from an awake state to the power save state.

The transmitting module is configured for the apparatus to transition from the power save state to the awake state.

In a case where data is present within a TXOP for downlink transmission, the apparatus transitions from the power save state to the awake state to perform the downlink transmission of the data to the third STA.

The transmitting module is configured for the apparatus to transmit a trigger frame to the third STA.

The trigger frame is used to indicate to the third STA that the apparatus is to transmit downlink data to the third STA. In some embodiments, the trigger frame also indicates a third duration, which is an expected transmission duration of the apparatus.

The transmitting module is configured for the apparatus to transmit data to the third STA.

In some embodiments, with reference to FIG. 13, the apparatus transmits downlink data to the third STA following a predetermined interval after transmitting the trigger frame. The predetermined interval may be any one of: an SIFS, a PIFS, or a DIFS. The embodiments are illustrated by using an example where the interval is the SIFS.

The transmitting module is configured for the apparatus to transition from the awake state to the power save state.

Upon completion of the downlink data transmission, the apparatus transitions back from the awake state to the power save state.

The transmitting module is configured for the apparatus to enter the awake state upon completion of the TXOP.

Upon completion of the TXOP, the apparatus transitions from the power save state to the awake state. In addition, at least one of the first STA or the second STA exits the silent mode.

The transmitting module 1620 is further configured to perform CCA detection prior to transmitting the downlink data.

Within the TXOP, upon receiving data for downlink transmission from a DS, the apparatus may actively transition from the power save state to the awake state and initiate downlink transmission, and transition back to the power save state upon completion of the downlink transmission. To avoid OBSS interference, the apparatus is required to perform CCA detection prior to the initiation of the downlink transmission, and may only perform the transmission in a case where a channel is idle within a PIFS or DIFS.

In some embodiments, the receiving module 1660 is further configured to receive a fourth PPDU of the first version from a fourth STA within the TXOP; and the transmitting module 1620 is further configured to reply to the fourth STA with a fifth PPDU of the first version upon receiving the fourth PPDU of the first version from the fourth STA within the TXOP.

The fourth STA is a to-be-associated STA that supports the first version or the second version.

In some embodiments, the fourth PPDU carries a Probe Request frame, and the fifth PPDU carries a Probe Response frame; or the fourth PPDU carries an Authentication Request frame, and the fifth PPDU carries an Authentication Response frame; or the fourth PPDU carries an Association Request frame, and the fifth PPDU carries an Association Response frame.

In some embodiments, the receiving module 1660 is further configured to receive an Authentication Request frame or an Association Request frame from the fourth STA within the TXOP; and the processing module 1640 is configured to transition from the power save state to the awake state upon receiving the Authentication Request frame or the Association Request frame from the fourth STA within the TXOP.

In some embodiments, the processing module 1640 is configured to transition from the power save state to an awake state upon completion of the TXOP. Upon completion of the TXOP, the AP transitions from the power save state to the awake state. In addition, at least one of the first STA or the second STA also exits the silent mode.

In some embodiments, transmission in the power save state is performed over a sub-channel corresponding to the power save state using a spatial stream.

In some embodiments, transmission in the awake state is performed over a current maximum available bandwidth using at least one spatial stream.

In some embodiments, the transmitting module 1620 is further configured to perform the transmission-related steps performed by the apparatus in the above method embodiments.

The processing module 1640 is configured to perform the steps related to determination, processing, and calculation performed by the AP in the above method embodiments.

The receiving module 1660 is configured to perform the reception-related steps performed by the apparatus in the above method embodiments.

In some embodiments, the apparatus according to the embodiments of the present disclosure includes one transmitting module 1620, which supports performing all transmission-related steps performed by the apparatus in the above method embodiments.

In some embodiments, the apparatus according to the embodiments of the present disclosure includes a plurality of transmitting modules 1620, which respectively support performing part of the transmission-related steps performed by the apparatus in the above method embodiments.

In some embodiments, the steps performed by different transmitting modules 1620 may be completely the same, partially the same, or completely different.

In some embodiments, the apparatus according to the embodiments of the present disclosure includes one processing module 1640, which supports performing all steps related to determination, processing, and calculation performed by the apparatus in the above method embodiments.

In some embodiments, the apparatus according to the embodiments of the present disclosure includes a plurality of processing modules 1640, which respectively support performing part of the steps related to determination and/or processing and/or calculation performed by the apparatus in the above method embodiments.

In some embodiments, the steps performed by different processing modules 1640 may be completely the same, partially the same, or completely different.

In some embodiments, the apparatus according to the embodiments of the present disclosure includes one receiving module 1660, which supports executing all reception-related steps performed by the apparatus in the above method embodiments.

In some embodiments, the apparatus according to the embodiments of the present disclosure includes a plurality of receiving modules 1660, which respectively support performing part of the reception-related steps performed by the apparatus in the above method embodiments.

In some embodiments, the steps performed by different receiving modules 1660 may be completely the same, partially the same, or completely different.

In summary, the apparatus according to the present disclosure is capable of applying the apparatus power-saving method even in a case where legacy STAs and/or STAs that do not support an apparatus dynamic power-saving function are associated with the apparatus supporting the apparatus power-saving method, thereby improving the power-saving effect of the apparatus.

FIG. 17 is a structural block diagram of an AP power-saving apparatus according to some exemplary embodiments of the present disclosure. The apparatus includes at least some of: a receiving module 1720, a processing module 1740, and a transmitting module 1760.

The receiving module 1720 is configured to receive a first frame from an AP.

In some embodiments, the apparatus refers to at least one STA that supports a power-saving function. In some embodiments, the apparatus supports a second version of a communication protocol.

In some embodiments, the first frame is used to indicate that the AP has acquired a TXOP and is to enter a power save state within the TXOP, and to indicate related operations between the apparatus and the AP in the power save state, such as uplink and/or downlink data transmission.

For other characteristics of the first frame, reference may be made to the relevant description in step 210, which are not elaborated herein.

The processing module 1740 is configured to determine, based on the first frame, whether the AP enters a power save state within a TXOP.

The first frame is provided with at least three different implementation modes for indicating that the AP is to enter the power save state within the TXOP. In different embodiments, at least one of the three implementation modes as described hereinafter may be adopted.

**First mode** (implicit indication): In a case where no downlink transmission is performed by the AP within a predetermined duration following the first frame, the apparatus determines that the AP enters the power save state.

In a non-power-saving scenario, the AP performs down link transmission within the predetermined duration upon acquisition of the TXOP. However, in a power-saving scenario, the AP enters a power save state upon acquisition of the TXOP, and does not perform any downlink transmissions within the predetermined duration.

The processing module is configured to, in a case where a detection result indicates no downlink transmission by the AP within a predetermined duration following the first frame, determine that the AP enters the power save state.

**Second mode** (explicit indication): A value of a first bit in the first frame is a first value.

In some embodiments, the first frame is a CTS-to-Self frame, and the first bit is an individual bit or a group bit. For example, the first frame is a CTS-to-Self frame; and an individual bit or a group bit in an RA of the CTS-to-Self frame is set to 1 to indicate that the AP enters the power save state within a current TXOP, or the individual bit or the group bit is set to 0 to indicate that the AP does not enter the power save state within the current TXOP.

In some embodiments, the first frame is a trigger frame, and the first bit is a bit in a Common Info field. For example, a reserved bit in a Common Info field of an MU-RTS trigger frame is set to 1 to indicate that the AP enters the power save state within a current TXOP, or the reserved bit is set to 0 to indicate that the AP does not enter the power save state within the current TXOP.

In some embodiments, the first value is 1. However, in other embodiments, the first value is 0.

Upon parsing a value of the first bit in the first frame as the first value, the apparatus determines that the AP enters the power save state.

**Third mode** (explicit indication): A first field in the first frame is null.

In some embodiments, the transmitting module 1760 is configured to transmit a second frame, wherein the second frame is used to request data transmission.

The apparatus refers to at least one STA that supports the power-saving function. Even in a case where the AP is in the power save state, the apparatus is still capable of performing uplink transmission with the AP. Within a TXOP acquired by the AP via contention, the apparatus may transmit the second frame in a case where the apparatus gains access to a transmission medium or channel using an EDCA mechanism. The second frame is carried in a second PPDU of the first version.

In some embodiments, with reference to the example in FIG. 7, the second frame is an RTS frame. In some embodiments, the second frame is a control frame. The embodiments are illustrated by using an example where the second frame is an RTS frame.

In some embodiments, the second PPDU is a PPDU of the first version, or employs a PPDU format of the first version, such as a non-HT PPDU or a non-HT duplicate PPDU.

In some embodiments, a Duration field in the second frame indicates an expected transmission duration of the apparatus. That is, the second frame carries the second duration, which is the expected transmission duration of the apparatus within the TXOP. The time indicated by a sum of the end time of the second frame and the second duration shall not be later than the time indicated by a sum of the end time of the first frame and the first duration. That is, the expected transmission of the apparatus shall be completed prior to the end of the TXOP.

In some embodiments, the second frame carries a second duration, wherein the second duration is an expected transmission duration of the apparatus within the TXOP.

In some embodiments, the second frame is an RTS frame, or the second frame is a control frame.

In some embodiments, the second frame is carried in a second PPDU of the first version.

In some embodiments, the second frame or a second PPDU carrying the second frame includes a padding field, wherein the padding field is determined based on state transition time of the AP, and the state transition time is required for the AP to transition from the power save state to an awake state.

The receiving module 1720 is configured to receive a Beacon frame, wherein the Beacon frame carries indication information of the state transition time.

In some embodiments, a certain amount of time is required for an AP to transition from the power save state to the awake state. Some APs require a longer time to complete the transition from the power save state to the awake state. The AP may pre-indicate the required state transition time in a Beacon frame and/or a Probe Response frame. Based on the state transition time, the apparatus may add padding in the second frame and/or add padding in the PPDU carrying the second frame.

That is, the second frame or the second PPDU carrying the second frame is provided with a padding field, which is determined based on the state transition time of the AP. The state transition time is used to indicate the time required for the AP to transition from the power save state to a normal state (e.g., the awake state).

In some embodiments, the second PPDU carrying the second frame is a sequence of at least two PPDUs.

The receiving module 1720 is further configured to receive a third frame, wherein the third PPDU is used to indicate that the AP has transitioned to an awake state.

The third frame is used to indicate that the AP has transitioned from the power save state to the awake state, and/or the third frame is used to indicate an agreement to uplink data transmission of the apparatus.

In some embodiments, with reference to the example in FIG. 7, the third frame is a CTS frame.

In some embodiments, the AP transmits the third frame to the STA following an SIFS after receiving the second frame.

In some embodiments, an initial PPDU first transmitted by the AP after transitioning from the power save state to the awake state is required to be a non-HT duplicate PPDU. In addition, this PPDU is transmitted over a current maximum available bandwidth using at least one stream to occupy the transmission medium, ensuring that a larger transmission bandwidth is available for subsequent transmissions in the awake state.

In some embodiments, the current maximum available bandwidth is determined as follows: a channel with the largest bandwidth is formed by a sub-channel used by the AP in the power save state and another sub-channel that remains idle within a PIFS or DIFS prior to transmission of the initial PPDU.

In some embodiments, the third frame is carried in a third PPDU of the first version.

The receiving module 1720 is further configured to receive a trigger frame, wherein the trigger frame is used to instruct the apparatus to transmit data.

The trigger frame is used to indicate to the apparatus that the AP is to transmit downlink data to the apparatus. In some embodiments, the trigger frame also indicates a third duration, which is an expected transmission duration of the AP.

Within the TXOP, upon receiving data for downlink transmission from a DS, the AP may actively transition from the power save state to the awake state and initiate downlink transmission, and transition back to the power save state upon completion of the downlink transmission. To avoid OBSS interference, the AP is required to perform CCA detection prior to the initiation of the downlink transmission, and may only perform the transmission in a case where a channel is idle within a PIFS or DIFS.

The receiving module 1720 is further configured to receive data from the AP.

In some embodiments, with reference to FIG. 13, the AP transmits downlink data to the third STA following a predetermined interval after transmitting the trigger frame. The predetermined interval may be any one of: an SIFS, a PIFS, or a DIFS. The embodiments are illustrated by using an example where the interval is the SIFS.

In some embodiments, the receiving module 1720 is further configured to receive a trigger frame prior to receiving the data from the AP, wherein the trigger frame is used to instruct the apparatus to receive data.

In some embodiments, transmission in the power save state is performed over a sub-channel corresponding to the power save state using a spatial stream. In some embodiments, transmission in the awake state is performed over a current maximum available bandwidth using at least one spatial stream.

In some embodiments, the second receiving module 1720 is further configured to perform the reception-related steps performed by the apparatus in the method embodiments.

The processing module 1740 is configured to perform the steps related to determination, processing, and calculation performed by the apparatus in the above method embodiments.

The transmitting module 1760 is configured to perform the transmission-related steps performed by the apparatus in the above method embodiments.

In some embodiments, the apparatus according to the embodiments of the present disclosure includes one receiving module 1720, which supports performing all reception-related steps performed by the apparatus in the above method embodiments.

In some embodiments, the apparatus according to the embodiments of the present disclosure includes a plurality of receiving modules 1720, which respectively support performing part of the reception-related steps performed by the apparatus in the above method embodiments.

In some embodiments, the steps performed by different receiving modules 1720 may be completely the same, partially the same, or completely different.

In some embodiments, the apparatus according to the embodiments of the present disclosure includes one processing module 1740, which supports performing all steps related to determination, processing, and calculation performed by the apparatus in the above method embodiments.

In some embodiments, the apparatus according to the embodiments of the present disclosure includes a plurality of processing modules 1740, which respectively support performing part of the steps related to determination and/or processing and/or calculation performed by the apparatus in the above method embodiments.

In some embodiments, the steps performed by different processing modules 1740 may be completely the same, partially the same, or completely different.

In some embodiments, the apparatus according to the embodiments of the present disclosure includes one transmitting module 1760, which supports performing all transmission-related steps performed by the apparatus in the above method embodiments.

In some embodiments, the apparatus according to the embodiments of the present disclosure includes a plurality of transmitting modules 1760, which respectively support performing part of the transmission-related steps performed by the apparatus in the above method embodiments.

In the apparatus according to the present disclosure, the AP employs the AP power-saving method even in a case where legacy STAs and/or STAs that do not support an AP power-saving function are associated with the AP supporting the AP power-saving method, such that the power-saving effect of the AP is improved.

FIG. 18 is a schematic structural diagram of a wireless device (an AP or an STA) according to some exemplary embodiments of the present disclosure. The wireless device 1800 includes: a processor 1801, a receiver 1802, a transmitter 1803, a memory 1804, and a bus 1805.

The processor 1801 includes one or more processing cores, and the processor 1801 executes various functional applications and information processing by running software programs and modules. In some embodiments, the processor 1801 may be configured to implement the functions and perform steps of the first processing module 1340 and/or the second processing module 1740 as described above.

The receiver 1802 and the transmitter 1803 may be implemented as a communication component, which may be a communication chip. In some embodiments, the receiver 1802 may be configured to implement the functions and perform steps of the first receiving module 1360 and/or the second receiving module 1720 as described above. In some embodiments, the transmitter 1803 may be configured to implement the functions and perform steps of the first transmitting module 1620 and/or the second transmitting module 1760 as described above.

The memory 1804 is communicably connected to the processor 1801 via the bus 1805. The memory 1804 may be configured to store at least one instruction, and the processor 1801 is configured to execute the at least one instruction to perform the steps in the above method embodiments.

In addition, the memory 1804 may be implemented by any type of volatile or non-volatile storage device or a combination thereof. The volatile or non-volatile storage devices include, but are not limited to: a magnetic or optical disk, an electrically-erasable programmable read-only memory (EEPROM), an erasable programmable read-only memory (EPROM), a static random-access memory (SRAM), a read-only memory (ROM), a magnetic memory, a flash memory, and a programmable read-only memory (PROM).

In some embodiments, the receiver 1802 receives signals/data independently, or the processor 1801 controls the receiver 1802 to receive signals/data, or the processor 1801 requests the receiver 1802 to receive signals/data, or the processor 1801 cooperates with the receiver 1802 to receive signals/data.

In some embodiments, the transmitter 1803 transmits signals/data independently, or the processor 1801 controls the transmitter 1803 to transmit signals/data, or the processor 1801 requests the transmitter 1803 to transmit signals/data, or the processor 1801 cooperates with the transmitter 1803 to transmit signals/data.

Some exemplary embodiments of the present disclosure further provide a computer-readable storage medium. The computer-readable storage medium stores at least one program, and the at least one program is loaded and executed by the processor to perform the AP power-saving method provided in the above method embodiments.

Some exemplary embodiments of the present disclosure further provide a chip. The chip includes programmable logic circuitry and/or one or more program instructions. The chip, when running on a communication device, is configured to perform the AP power-saving method provided in the above method embodiments.

Some exemplary embodiments of the present disclosure further provide a computer program product. The computer program product, when running on a processor of a wireless device, causes the wireless device to perform the AP power-saving method as described above.

Some exemplary embodiments of the present disclosure further provide a computer program. The computer program includes one or more computer instructions. The one or more computer instructions, when executed by a processor of a wireless device, cause the wireless device to perform the AP power-saving method as described above.

A person skilled in the art should be aware that in the foregoing one or more examples, the functions described in the embodiments of the present disclosure may be implemented by hardware, software, firmware, or any combination thereof. The functions, when implemented by software, may be stored in a computer-readable medium or transmitted as one or more instructions or codes on the computer-readable medium. The computer-readable medium includes a computer storage medium and a communication medium. The communication medium includes any medium that facilitates transfer of a computer program from one place to another. The storage medium may be any available medium accessible by a general-purpose computer or a special-purpose computer.

It should be understood that the frame formats and element formats illustrated in the embodiments of the present disclosure are exemplary. In different embodiments or different designs, it is not excluded that the position of each field in the frame/element, the arrangement order with other fields, the number of occupied bytes, and the number of occupied bits are changed in at least one design. The present disclosure does not limit the specific format of each frame and each element.

Described above are merely optional embodiments of the present disclosure and are not used to limit the present disclosure. Any modifications, equivalent substitutions, improvements, and the like made within the spirit and principles of the present disclosure shall be included within the protection scope of the present disclosure.

## Claims

1. An access point, AP, power-saving method, performed by an AP, the method comprising:
transmitting a first frame, wherein the first frame is used to indicate that the AP has acquired a transmission opportunity, TXOP, and is to enter a power save state within the TXOP.

2. The method according to claim 1, wherein
the first frame is further used to instruct a first station, STA, to remain silent for a first duration within the TXOP;
wherein the first STA supports a first version of a communication protocol, and the AP supports a second version of the communication protocol, wherein the second version is a subsequent evolution of the first version.

3. The method according to claim 1, wherein
the first frame is further used to instruct a second station, STA, to remain silent for a first duration within the TXOP;
wherein the AP supports a second version of a communication protocol, and the second STA supports the second version and fails to support a power-saving function.

4. The method according to claim 2 or 3, wherein
the first duration is indicated by a Duration field carried in the first frame.

5. The method according to claim 1, wherein
the first frame is a clear-to-send to self, CTS-to-Self, frame, or
the first frame is a trigger frame.

6. The method according to claim 1, wherein
the first frame is carried in a first physical layer protocol data unit, PPDU, of a first version.

7. The method according to claim 1, further comprising:
disabling any downlink transmission for a predetermined duration following the first frame.

8. The method according to claim 1, wherein
a value of a first bit in the first frame is a first value; or
a first field in the first frame is null.

9. The method according to claim 8, wherein
in a case where the first frame is a clear-to-send to self, CTS-to-Self, frame, the first bit is an individual bit or a group bit; or
in a case where the first frame is a trigger frame, the first bit is a bit in a Common Info field.

10. The method according to claim 8, wherein
the first frame is a trigger frame, and the first field is a User Info List field.

11. The method according to any one of claims 1 to 10, wherein
the first frame is transmitted over a current maximum available bandwidth using at least one spatial stream; or
the first frame is transmitted over a sub-channel corresponding to the power save state using at least one spatial stream.

12. The method according to claim 11, wherein the current maximum available bandwidth comprises:
a sub-channel corresponding to the power save state; and
a sub-channel that remains idle for a predetermined duration prior to transmission of the first frame.

13. The method according to any one of claims 1 to 12, further comprising:
upon receiving a second frame from a third station, STA, within the TXOP, transitioning from the power save state to an awake state;
wherein the third STA supports a second version of a communication protocol and supports a power-saving function.

14. The method according to claim 13, wherein
the second frame carries a second duration, wherein the second duration is an expected transmission duration of the third STA within the TXOP.

15. The method according to claim 13, wherein
the second frame is a request-to-send, RTS, frame, or
the second frame is a control frame.

16. The method according to claim 13, wherein
the second frame is carried in a second physical layer protocol data unit, PPDU, of a first version.

17. The method according to any one of claims 13 to 16, wherein
the second frame or a second physical layer protocol data unit, PPDU, carrying the second frame comprises a padding field;
wherein the padding field is determined based on state transition time of the AP, and the state transition time is required for the AP to transition from the power save state to the awake state.

18. The method according to claim 17, further comprising:
transmitting a Beacon frame, wherein the Beacon frame carries indication information of the state transition time.

19. The method according to any one of claims 13 to 16, wherein
a second physical layer protocol data unit, PPDU, carrying the second frame is a sequence of at least two PPDUs.

20. The method according to any one of claims 13 to 16, further comprising:
transmitting a third frame to the third STA, wherein the third PPDU is used to indicate that the AP has transitioned to the awake state.

21. The method according to claim 20, wherein
the third frame is carried in a third physical layer protocol data unit, PPDU, of a first version.

22. The method according to any one of claims 13 to 16, further comprising:
transmitting a trigger frame to the third STA, wherein the trigger frame is used to instruct the third STA to transmit data.

23. The method according to any one of claims 13 to 16, further comprising:
transitioning from the awake state to the power save state upon completion of data transmission of the third STA.

24. The method according to any one of claims 1 to 23, further comprising:
in a case where data is present within the TXOP for downlink transmission, transitioning from the power save state to an awake state and performing the downlink transmission of the data.

25. The method according to claim 22, further comprising:
performing clear channel assessment, CCA, detection prior to transmission of the downlink data.

26. The method according to any one of claims 1 to 25, further comprising:
upon receiving a fourth physical layer protocol data unit, PPDU, of a first version from a fourth station, STA, within the TXOP, replying to the fourth STA with a fifth PPDU of the first version;
wherein the fourth STA is a to-be-associated STA that supports the first version or a second version.

27. The method according to claim 26, wherein
in a case where the fourth PPDU carries a Probe Request frame, the fifth PPDU carries a Probe Response frame; or
in a case where the fourth PPDU carries an Authentication Request frame, the fifth PPDU carries an Authentication Response frame; or
in a case where the fourth PPDU carries an Association Request frame, the fifth PPDU carries an Association Response frame.

28. The method according to claim 27, further comprising:
upon receiving the Authentication Request frame or the Association Request frame from the fourth STA within the TXOP, transitioning from the power save state to an awake state.

29. The method according to any one of claims 1 to 28, further comprising:
transitioning from the power save state to an awake state upon completion of the TXOP.

30. The method according to any one of claims 1 to 29, wherein
transmission in the power save state is performed over a sub-channel corresponding to the power save state using a spatial stream.

31. The method according to any one of claims 13 to 25 and 28, wherein
transmission in the awake state is performed over a current maximum available bandwidth using at least one spatial stream.

32. The method according to any one of claims 1 to 31, wherein
a first physical layer protocol data unit, PPDU, of a first version is a non-high throughput, non-HT, PPDU or a non-HT duplicate PPDU.

33. An access point, AP, power-saving method, performed by a third station, STA, the method comprising:
receiving a first frame from an AP; and
determining, based on the first frame, whether the AP enters a power save state within a transmission opportunity, TXOP.

34. The method according to claim 33, wherein determining, based on the first frame, whether the AP enters the power save state comprises:
in a case where no downlink transmission is performed by the AP within a predetermined duration following the first frame, determining that the AP enters the power save state.

35. The method according to claim 33, wherein determining, based on the first frame, whether the AP enters the power save state comprises:
in a case where a value of a first bit in the first frame is a first value, determining that the AP enters the power save state; or
in a case where a first field in the first frame is null, determining that the AP enters the power save state.

36. The method according to claim 35, wherein
in a case where the first frame is a clear-to-send to self, CTS-to-Self, frame, the first bit is an individual bit or a group bit; or
in a case where the first frame is a trigger frame, the first bit is a bit in a Common Info field.

37. The method according to claim 35, wherein
the first frame is a trigger frame, and the first field is a User Info List field.

38. The method according to any one of claims 33 to 37, wherein
the first frame is carried in a first physical layer protocol data unit, PPDU, of a first version, and the AP and the third STA support a second version of a communication protocol, wherein the second version is a subsequent evolution of the first version.

39. The method according to claim 38, wherein
the first PPDU of the first version is a non-high throughput, non-HT, PPDU or a non-HT duplicate PPDU.

40. The method according to any one of claims 33 to 39, wherein
the power save state is on a per-TXOP basis.

41. The method according to any one of claims 33 to 39, further comprising:
transmitting a second frame, wherein the second frame is used to request data transmission.

42. The method according to claim 40, wherein
the second frame carries a second duration, wherein the second duration is an expected transmission duration of the third STA within the TXOP.

43. The method according to claim 40, wherein
the second frame is a request-to-send, RTS, frame, or
the second frame is a control frame.

44. The method according to claim 40, wherein
the second frame is carried in a second physical layer protocol data unit, PPDU, of a first version.

45. The method according to any one of claims 40 to 43, wherein
the second frame or a second physical layer protocol data unit, PPDU, carrying the second frame comprises a padding field;
wherein the padding field is determined based on state transition time of the AP, and the state transition time is required for the AP to transition from the power save state to an awake state.

46. The method according to claim 44, further comprising:
receiving a Beacon frame, wherein the Beacon frame carries indication information of the state transition time.

47. The method according to any one of claims 40 to 43, wherein
a second physical layer protocol data unit, PPDU, carrying the second frame is a sequence of at least two PPDUs.

48. The method according to any one of claims 40 to 43, further comprising:
receiving a third frame, wherein the third PPDU is used to indicate that the AP has transitioned to an awake state.

49. The method according to claim 47, wherein
the third frame is carried in a third physical layer protocol data unit, PPDU, of a first version.

50. The method according to claim 47, further comprising:
receiving a trigger frame, wherein the trigger frame is used to instruct the third STA to transmit data.

51. The method according to any one of claims 33 to 49, further comprising:
receiving data from the AP.

52. The method according to claim 50, wherein, prior to receiving the data from the AP, the method further comprises:
receiving a trigger frame, wherein the trigger frame is used to instruct the third STA to receive data.

53. The method according to any one of claims 33 to 51, wherein
transmission in the power save state is performed over a sub-channel corresponding to the power save state using a spatial stream.

54. An access point, AP, power-saving apparatus, comprising:
a transmitting module, configured to transmit a first frame, wherein the first frame is used to indicate that an AP has acquired a transmission opportunity, TXOP, and is to enter a power save state within the TXOP.

55. An access point, AP, power-saving apparatus, comprising:
a receiving module, configured to receive a first frame from an AP; and
a processing module, configured to determine, based on the first frame, whether the AP enters a power save state within a transmission opportunity, TXOP.

56. A wireless device, comprising:
a processor;
a transceiver communicably connected to the processor; and
a memory for storing one or more instructions executable by the processor;
wherein the processor is configured to load and execute the one or more instructions to perform the AP power-saving method as defined in any one of claims 1 to 52.

57. A computer-readable storage medium, storing one or more executable instructions, wherein the one or more executable instructions, when loaded and executed by a processor cause the processor to perform the AP power-saving method as defined in any one of claims 1 to 52.

58. A chip, comprising: programmable logic circuitry or one or more programs, wherein the chip is configured to perform the AP power-saving method as defined in any one of claims 1 to 52.

59. A computer program product, comprising one or more computer instructions stored in a computer-readable storage medium,
wherein the one or more computer instructions, when read by a processor of a wireless device from the computer-readable storage medium and executed by the processor cause the wireless device to perform the AP power-saving method as defined in any one of claims 1 to 52.

60. A computer program, comprising one or more computer instructions, wherein the one or more computer instructions, when executed by a processor of a wireless device cause the wireless device to perform the AP power-saving method as defined in any one of claims 1 to 52.
